# EUROPEAN PATENT APPLICATION

(11) **EP 4 711 179 A1**
(43) Date of publication of application: **18.03.2026**
(21) Application number: 24199636.2
(22) Date of filing: 11.09.2024
(51) Int. Cl.: B60L 3/00, B60L 3/04, B60L 50/15, B60L 50/40, H02J 7/34

(54) **POWER DISTRIBUTION SYSTEM AND VEHICLE THEREWITH**

(71) Applicant: AUMOVIO Germany GmbH, 60488 Frankfurt am Main (DE)
(72) Inventor: Olberts,Dr. Bastian, 30175 Hannover (DE)
(74) Representative: Aumovio Corporation

(57) **Abstract**

A power distribution system 100 comprises a power source 102, multiple consumer units 124,126,128,136 electrically connected to the power source 102, a power failure detection unit 108 electrically connected to the power source 102, the power failure detection unit 108 configured to detect a power failure of the power source 102, a communication means 130 configured to provide methods and processes for exchanging information between the power failure detection unit 108 and the multiple consumer units 124,126,128,136, and at least one capacitive energy source 114 electrically connected to at least one consumer unit 124,126,128,136 of the multiple consumer units 124,126,128,136. Upon detection of the power failure of the power source 102, the at least one capacitive energy source 114 providing power to the at least one consumer unit 124,126,128,136, the power failure detection unit 108 sending an indicator message to the at least one consumer unit 124,126,128,136 via the communication means 130, and the at least one consumer unit 124,126,128,136, upon receiving the indicator message, performing a preventive power-out measure.

## Description

### Technical Area

The present invention relates generally to electrical power systems, and more specifically to an improved power distribution system with enhanced fault protection. In particular, the present invention relates to a power distribution system allowing power consuming units to take preventive measures in case of a power failure. Furthermore, the present invention relates to a vehicle comprising said power system.

### Technical Background and Problem

Power distribution systems in vehicles have undergone a remarkable transformation in recent years, evolving to meet the ever-increasing demands of modern automotive technology. These systems play a crucial role in the functioning of today's vehicles, supplying electricity to a wide array of components and applications that enhance comfort, safety, and performance, and driving the industry towards a more electrified and efficient future. These systems typically comprise a network of interconnected components including transformers, switchgear, distribution lines, and control systems.

Traditionally, vehicles have relied on 12V systems for their electrical needs. However, the automotive industry is witnessing a significant shift towards higher voltage systems. While 12V systems remain common in many vehicles, 48V systems are gaining popularity, especially in mild hybrid electric vehicles. These higher voltage systems offer improved efficiency and enable the integration of more powerful electrical components. At the cutting edge of this trend are the high voltage systems used in battery electric vehicles, which typically operate at 400V to 800V. These high voltage systems are essential for powering the large electric motors and rapid charging systems required in modern electric vehicles.

However, these power distribution systems often struggle with several key challenges. One significant issue is fault protection, particularly in complex networks with multiple power sources and varying load conditions. Existing fault detection and isolation mechanisms may not adequately address the speed and accuracy requirements of modern power systems, potentially leading to equipment damage or extended service interruptions.

Another challenge lies in maintaining proper voltage levels throughout the distribution network, since this is crucial for the efficiency and stability of automotive systems. There remains a need for an improved power distribution system that can address these challenges while providing enhanced reliability, efficiency, and flexibility.

Also, the rise of autonomous vehicles has placed new demands on power distribution systems. These vehicles require fault-tolerant power supply systems to ensure the continuous operation of critical functions, even in the event of component or power supply failures.

The object of the invention is to provide power distribution systems which eliminate at least one of the previously mentioned disadvantages. Furthermore, it is the object of the invention to provide a vehicle comprising said power distribution systems.

### Disclosure of the Invention

The object of the invention is met by the subject-matter of the independent claims. Advantageous embodiments of the invention are subject-matter of the dependent claims.

According to a first aspect of the invention, a power distribution system comprises a power source, multiple consumer units electrically connected to the power source, a power failure detection unit electrically connected to the power source, a communication means, and at least one capacitive energy source electrically connected to at least one consumer unit of the multiple consumer units. The power failure detection unit is configured to detect a power failure of the power source while the communication means provides methods and processes for exchanging information between the power failure detection unit and the multiple consumer units.

The power source might be a 12V battery, a 48V battery, a fuel cell, wireless charging system, a Vehicle-to-Grid system, or the like.

Examples for consumer units are ECUs (electronic control units), MCUs (micro-controller units), processors, sensors, actuators, infotainment systems, or the like. Basically any component in a vehicle that requires electric energy can serve as an example for a consumer unit. The consumer units supplied with electric energy by the power source. To enable this energy transfer, the consumer units are electrically connected to the power source, e.g., using wires or wireless energy transmission.

The power failure detection unit is also electrically connected to the power source, allowing to monitor and identify interruptions or losses in the electrical power supply of the power source. Through continuous monitoring and constantly observing the incoming power supply, any fluctuations or complete outages can be quickly detected.

The power failure detection unit might comprise a processor configured to manage the power distribution system via a computer program product. The computer program product comprises commands which, when executed by a computer, cause it to execute a method to manage the power distribution system as described in this invention. The computer program product can be written in a programming language such as Python or C++. The power failure detection unit might also comprise a computer-readable storage medium which comprises said computer program product. The computer-readable storage medium can be designed as an SSD (solid-state disk) or as flash memory, for example. The computer-readable storage medium can also store other data, such as sensor data and/or data that is (temporarily) stored during the execution of the computer program product. The computer program product might be transmitted, at least in part, via a data carrier signal. The data carrier signal can be transmitted wired, for example by means of a CAN-Bus cable, FlexRay, Ethernet, LIN (Local Interconnect Network) or MOST (Media Oriented Systems Transport). It can optionally or additionally be transmitted wirelessly via Wifi, Bluetooth, mobile communications or the like.

In general, the electrical connection between different components of the power distribution system might not be a direct connection, but rather an indirect one. For example, a consumer unit might be connected with the power source via several other components such as an electronic fuse (eFuse).

The communication means might be wired or wireless. Examples for communication means are CAN (Controller Area Network) Bus systems, Bluetooth, or Wifi. The communication means also implement methods and processes for exchanging information, such as protocols, including encoding, decoding, and the like. The communication means might include, optionally or additionally a CAN-Bus system, further signal routing systems such as PCI Express (PCIe) or Universal Serial Bus (USB).

The at least one capacitive energy source is configured to store electric energy. In contrast to the power source, the capacitive energy source typically can store much less energy and self-discharges more rapidly. Examples for the capacitive energy source are capacitors or supercapacitors.

According to the first aspect of the invention, upon detection of the power failure of the power source, the at least one capacitive energy source provides power to the at least one consumer unit, the power failure detection unit sends an indicator message to the at least one consumer unit via the communication means, and the at least one consumer unit, upon receiving the indicator message, performs a preventive power-out measure.

Hence, the purpose of the capacitive energy source is to provide sufficient energy for the power failure detection unit to warn the at least one consumer unit about an imminent power-out via the indicator message while allowing the at least one consumer unit to initiate the preventive power-out-measure. In general, not all consumer units might be relevant enough to have them initiate a preventive power-out measure. Some consumer units might not be as security-relevant as required to be notified while others do not suffer from an abrupt power-out. Those consumer units, while being provided with power by the power source, might be excluded from receiving the indicator message or power from the the at least one capacitive energy source.

An example for a preventive power-out-measure is initiating a shutdown process, in which security-relevant data are saved. Also, forwarding the indicator message to another consumer unit might be a preventive power-out-measure, in case that consumer unit has no communicative connection to the power failure detection unit.

Advantageously, the preventive power-out measure is at least one of: initiating a shutdown process, saving security-relevant data, and/or forwarding the indicator message.

Advantageously, the system comprises at least one of: a DC converter, an ECU/ECM, a MCU, a processor, a System-on-Chip, a resistor, an electronic fuse, a power multiplexer, and/or a Mosfet. These components are frequently used in automotive control systems.

For example, eFuses can be used to prevent the backflow of electric energy into energy sources such as batteries, thereby protecting sensitive system components. A System-on-Chip (SoC) might integrate a lot of components, and therefore a lot of functionalities, onto a single integrated circuit. These might include receiving sensor data, computing metrics based on those sensor data, and sending responses based on the metrics. The SoC might further comprise a central processing unit (CPU) and memory. The SoC might function as the power failure detection unit. In that case, the SoC comprises means to monitor the power source and creating and sending the indicator message to the at least one consumer unit.

Advantageously, the at least one capacitive energy source is configured to compensate voltage fluctuations in the system. One of the main elements of that configuration is the location of the at least one capacitive energy source within the electrical wiring of the power distribution system. The location must ensure that the at least one capacitive energy source can be charged with energy, for example, via the power source. Simultaneously, the location must ensure that the at least one consumer unit can be supplied with electric energy via the at least one capacitive energy source.

Advantageously, the system further comprises a resistor which is configured to dissipate conductive energy from the multiple consumer units.

Some vehicles allow to recuperate energy, e.g., via regenerative braking. With this feature, vehicles capture and store energy which is otherwise typically lost, e.g., during braking. However, in some cases, the storage of energy might fail, e.g., because the energy storage is already full. In that case, the electrical wiring of the power distribution system is configured to be able to receive a backflow of electric power from the consumer units and channel it to the resistor. The resistor converts the excess electric energy into heat. To prevent the resistor from overheating, it is possible to attach cooling means such as heat sinks to the resistor.

Advantageously, the at least one capacitive energy source provides power to the at least one consumer unit for at least 20ms. It is further advantageous, if the at least one consumer unit is provided with energy for at least 30ms. These time frames allow ordinary consumer units to shut-down properly before the power-out.

Advantageously, a consumer unit of the multiple consumer units is at least one of: a brake, an electric motor, an air conditioning system, a heating system, a cooling system, a battery thermal management system, a lightning means, an infotainment system, a seat heater, a lock, a window lifter, an anti-lock brake system, and/or windshield wipers.

Advantageously, only a first electronic fuse is directly electrically connected to the power source, the first electronic fuse configured to prevent a power flow to the power source.

Advantageously, the system further comprises at least one additional power source configured to provide backup power to the at least one consumer unit of the multiple consumer units or all of the multiple consumer units.

According to a second aspect of the invention, a vehicle comprises the before-disclosed system.

### Short Description of the Figures

The invention will be further discussed in the following based on preferred embodiments presented in the attached drawings. However, the invention may be embodied in many different forms and should not be construed as limited to said preferred embodiments. Rather, said preferred embodiments are provided for thoroughness and completeness, and fully convey the scope of the invention to the skilled person.

The following detailed description refers to the attached drawings, in which:
Figure 1: Block diagram of a first embodiment of a power distribution system;
Figure 2: A vehicle comprising the power distribution system of Figure 1; and
Figure 3: Block diagram of a second embodiment of a power distribution system.

### Detailed Description of the Figures

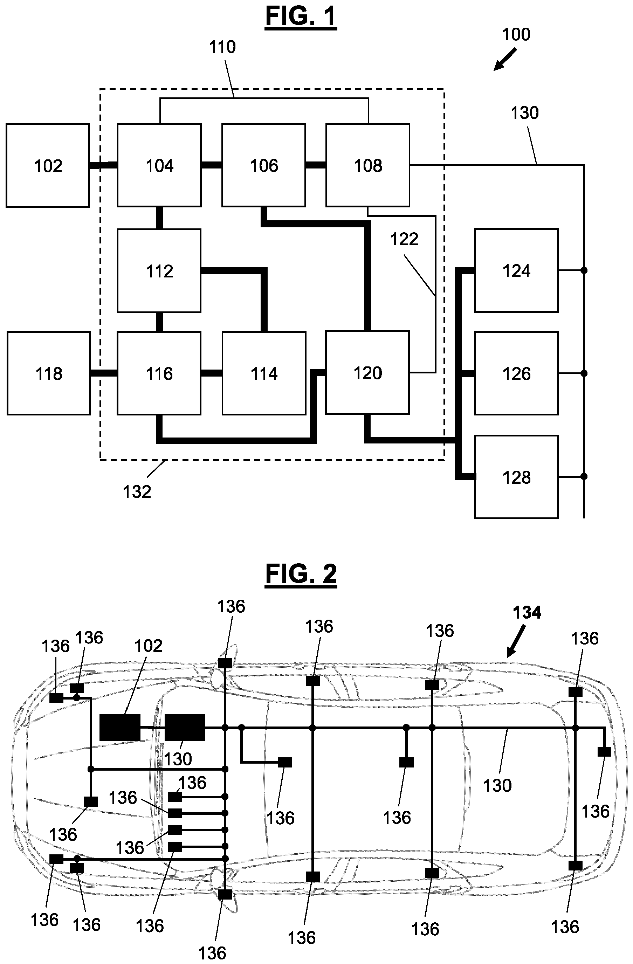

Figure 1 shows a block diagram of a first embodiment of a power distribution system 100. In Figure 1, electric connections are shown as thick solid lines while communication connections are shown as thin solid lines.

In Figure 1, a power distribution system 100 comprises a power source 102, which is communicatively connected via a first communication means 110 to a first electronic fuse (eFuse) 104. The first communication means 110 is a data cable. A System-on-Chip 108 is indirectly electrically connected to the power source via a first DC converter 106 and the first eFuse 104.

The System-on-Chip 108 acts as a management unit for the power distribution system 100. As such, it implements methods of a power failure detection unit 108. The first communication means 110 enables monitoring of the power source 102 by receiving measurements of the first eFuse 104. Alternatively, the power failure detection unit 108 might monitor the power source 102 directly via a dedicated comparator circuit. These are just two options to facilitate the System-on-Chip 108 being able to monitor the power source 102.

Further, the power distribution system 100 of Figure 1 comprises a second DC converter 112, a capacitive energy source 114, a power multiplexer 116, and a backup power source 118. The power multiplexer 116 (also power MUX 116) is an electronic device that selects and switches between multiple input power sources to deliver power to a single output. In the example of Figure 1, the multiple power sources are the backup power source 118, the second DC converter 112, and the capacitive energy source 114. The second DC converter 112 provides power from the power source 102. In case of a power source failure, the power MUX 116 is provided with power by the capacitive energy source 114.

The capacitive energy source 114 may come in the form of a supercapacitor 114. I the case of a power failure of the power source 102, the supercapacitor 114 may provide power until the backup power source 118 is able to provide power.

The power distribution system 100 of Figure 1 further comprises a second electronic fuse 120 which is communicatively connected via a second communication means 122 with the power failure detection unit 108. A first consumer unit 124, a second consumer unit 126, and a third consumer unit 128 are connected to the second eFuse 120, which provides power to the consumer units 124,126,128,136. Alternatively, the second eFuse 120 component could also be realized via, e.g., a Mosfet driver.

For simplicity, Figure 1 shows all consumer units 124,126,128,136 being attached to a single channel of the second eFuse 120. However, the consumer units 124,126,128,136 might be linked to the second eFuse 120 via individual channels. This implementation bears the advantage that malfunctioning consumer units 124,126,128,136 can be isolated individual.

The power failure detection unit 108 is also communicatively connected to the consumer units 124,126,128,136 via a CAN-Bus 130, for example, an automotive CAN-Bus of a vehicle 134.

The first eFuse 104, the DC converters 106,112, the System-on-Chip 108, the power MUX 116, and the capacitive energy source 114 form a smart power distributor unit 132. The smart power distributor unit 132 allows to provide power from a power source 102, such as a battery, to several consumer units 124,126,128,136, such as ECUs, sensors, or actuators. It also allows a backup power source 118 to provide power in case when the power source 102 fails to provide it. The smart power distributor unit 132 further is able to detect a possible power failure due to the System-on-Chip 108 being configured to read power measurements from the first electronic fuse 104 via the first communication means 110.

In case a power failure is detected, the System-on-Chip 108 can notify the second electronic fuse 120 about an imminent power failure via the second communication means 122. Also, the System-on-Chip 108 can notify the consumer units 124,126,128,136. For this purpose, the System-on-Chip 108 creates a indicator message, indicating the imminent power failure. The indicator message may comprise information about the imminent power failure such as a time stamp, or a time frame in which to expect a power outage.

Upon receiving the indicator message, the consumer units 124,126,128,136 can perform a preventive power-out measure. The preventive power-out measure may comprise saving of safety relevant data, initiating an action to safely bring the vehicle 134 to halt such as braking and/or steering, or starting a shutdown process.

Not all consumer units 124,126,128,136 may receive the indicator message or act on it. It might be intended to only allow certain consumer units to initiate the preventive power-out measure and cut off the rest from power completely. That way, the remaining power, provided by the capacitive energy source 114, can completely be spent on consumer units 124,126,128,136 that really matter, for example, because they are critical for passenger safety.

The second eFuse 120 can be instructed by the System-on-Chip 108, which consumer units 124,126,128,136 must need to be provided with power upon power failure. The capacitive energy source 114 is designed in its capacity to provide all components of the power distribution system 100 with power as long as necessary to initiate and perform critical preventive power-out measures.

Figure 2 shows a vehicle comprising the power distribution system of Figure 1. A power source 102 in the form of a battery provides power to a smart power distributor unit 132.

The smart power distributor unit 132 in turn allocates the power to several consumer unit 136 which are distributed over the whole vehicle 134. The consumer units 136 might be at least one of: rain sensor, light control, battery temperature sensor, back mirror camera, tailgate sensor, humidity sensor, infotainment ECU, high performance computer (HPC), zone control unit, or window opening/closing motor.

There are a lot of additional components, especially in a vehicle 134, that might be powered via the smart power distributor unit 130. The smart power distributor unit 130 might be employed once or several times, for example as a zone control unit, in a vehicle 134.

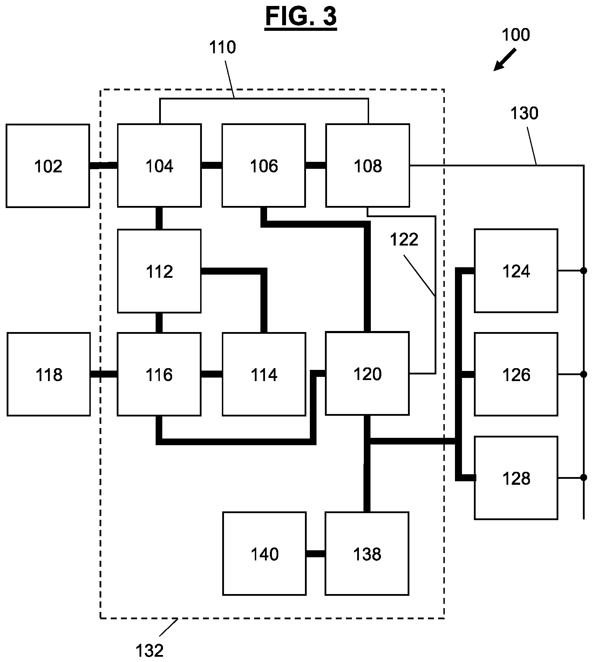

Figure 3 shows a block diagram of a second embodiment of a power distribution system 100. The details of Figure 3 at large resemble those of Figure 1, with the exception, that the system 100 further comprises a Mosfet 138 (Metal-oxide-semiconductor field-effect transistor) and a resistor 140.

The Mosfet 138 allows to control any possible power backflow from the consumer units 124,126,128,136 to the resistor 140. Such power backflow might result from specific types of consumer units 124,126,128,136, such as recuperative brakes or solar cells. The power backflow can be used to charge the capacitive energy source 114.

However, at some point, the capacitive energy source 114 is fully charged and cannot be absorbed by a component in the system 100. In that case, the excess power should be converted, for example, to heat, because it can otherwise cause problems in the system 100 such as high power fluctuations.

Therefore, in the case the capacitive energy source 114 is fully charged and excess energy is added to the system via some of the consumer units 124,126,128,136, the Mosfet 138 switches to route the excess energy to the resistor 140. The resistor 140 converts the excess energy into heat. For this purpose, heat sinks can be attached to the resistor 140 to allow for a better thermal heat dissipation.

### List of Reference Signs

- 100: System
- 102: Power source
- 104: First electronic fuse
- 106: First DC converter
- 108: System-on-Chip; Power failure detection unit
- 110: First communication means
- 112: Second DC converter
- 114: Capacitive energy source; Supercapacitor
- 116: Power multiplexer
- 118: Backup power source
- 120: Second electronic fuse
- 122: Second communication means
- 124: First consumer unit
- 126: Second consumer unit
- 128: Third consumer unit
- 130: CAN-Bus
- 132: Smart power distributor unit
- 134: Vehicle
- 136: Consumer unit
- 138: Mosfet
- 140: Resistor

## Claims

1. A power distribution system (100) comprising:
- a power source (102),
- multiple consumer units (124,126,128,136) electrically connected to the power source (102),
- a power failure detection unit (108) electrically connected to the power source (102), the power failure detection unit (108 configured to detect a power failure of the power source (102),
- a communication means (130) configured to provide methods and processes for exchanging information between the power failure detection unit (108) and the multiple consumer units (124,126,128,136),
- at least one capacitive energy source (114) electrically connected to at least one consumer unit (124,126,128,136) of the multiple consumer units (124,126,128,136),
wherein, upon detection of the power failure of the power source (102),
- the at least one capacitive energy source (114) providing power to the at least one consumer unit (124,126,128,136),
- the power failure detection unit (108) sending an indicator message to the at least one consumer unit (124,126,128,136) via the communication means (130), and
- the at least one consumer unit (124,126,128,136), upon receiving the indicator message, performing a preventive power-out measure.

2. The system according to claim 1, **characterized in that** the preventive power-out measure is at least one of: initiating a shutdown process, saving security-relevant data, and/or forwarding the indicator message.

3. The system according to claim 1 or 2, **characterized in that** the system (100) comprises at least one of: a DC converter (106,112), an ECU/ECM, a MCU, a processor, a System-on-Chip (108), a resistor (140), an electronic fuse (104,120, a power multiplexer (116), and/or a Mosfet (138).

4. The system according to one of the previous claims, **characterized in that** the at least one capacitive energy source (114) is configured to compensate voltage fluctuations in the system (100).

5. The system according to one of the previous claims, **characterized in that** the system (100) further comprises a resistor (140) which is configured to dissipate conductive energy from the multiple consumer units (124,126,128,136).

6. The system according to one of the previous claims, **characterized in that** the at least one capacitive energy source (114) provides power to the at least one consumer unit (124,126,128,136) for at least 20ms.

7. The system according to one of the previous claims, **characterized in that** a consumer unit (124,126,128,136) of the multiple consumer units (124,126,128,136) is at least one of: a brake, an electric motor, an air conditioning system, a heating system, a cooling system, a battery thermal management system, a lightning means, an infotainment system, a seat heater, a lock, a window lifter, an anti-lock brake system, and/or windshield wipers.

8. The system according to one of the previous claims, **characterized in that** only a first electronic fuse (104) is directly electrically connected to the power source (102), the first electronic fuse (104) configured to prevent a power flow to the power source (102).

9. The system according to one of the previous claims, **characterized in that** the system (100) further comprises at least one backup power source (118) configured to provide backup power to the at least one consumer unit (124,126,128,136) of the multiple consumer units (124,126,128,136) or all of the multiple consumer units (124,126,128,136).

10. Vehicle (134) comprising the system (100) according to one of the previous claims.
